Europäisches Patentamt

European Patent Office

Office européen des brevets

(11) Veröffentlichungsnummer: **0 237 869 B1**

# EUROPÄISCHE PATENTSCHRIFT

(45) Veröffentlichungstag der Patentschrift: **22.05.91**

(51) Int. Cl.⁵: **B01D 25/12**

(21) Anmeldenummer: **87103063.1**

(22) Anmeldetag: **04.03.87**

---

(54) Filterpresse.

---

(30) Priorität: **15.03.86 DE 3608774**

(43) Veröffentlichungstag der Anmeldung:
**23.09.87 Patentblatt 87/39**

(45) Bekanntmachung des Hinweises auf die
Patenterteilung:
**22.05.91 Patentblatt 91/21**

(84) Benannte Vertragsstaaten:
**AT BE CH DE ES FR GB IT LI NL SE**

(56) Entgegenhaltungen:
**DE-A- 3 447 978**
**DE-U- 8 702 367**
**FR-A- 2 173 002**

(73) Patentinhaber: **Rittershaus & Blecher GmbH**
**Wittensteinstrasse 80-100**
**W-5600 Wuppertal 2(DE)**

(72) Erfinder: **Oelbermann, Max**
**Moltkestrasse 19**
**W-5630 Remscheid(DE)**

(74) Vertreter: **Peerbooms, Rudolf, Dipl.-Phys.**
**Postfach 200 208 Dickmannstrasse 45c**
**W-5600 Wuppertal 2(DE)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Filterpresse mit von einem Führungsträger getragenen Filterplatten und mit einem längs der Filterpresse verfahrbaren Arbeitswagen zur automatischen Ausführung von Arbeitsvorgängen.

Durch die DE-C-26 27 578 ist eine Filterpresse mit an oberen Führungsträgern aufgehängten Filterplatten bekannt, die mit zwei, auf den oberen Führungsträgern verfahrbaren Arbeitswagen ausgerüstet ist, von denen einer eine Mitnehmereinrichtung zum Transport der Filterplatten und der andere Wagen ein Spritzrohr zum Abspritzen der Filterplatten trägt. Mit diesem Arbeitswagen kann folglich immer nur ein bestimmter Arbeitsvorgang ausgeführt werden. Andere Arbeitsvorgänge wie beispielsweise das Abschaben von Filterkuchenresten muß noch von dem Bedienungspersonal von Hand vorgenommen werden. Der Einsatz jeweils gesonderter Arbeitswagen für einzelne Arbeitsvorgänge bedingt aber einen erheblichen Herstellaufwand und einen verhältnismäßig großen Platzbedarf, wobei die bekannten Arbeitswagen auch nicht dazu geeignet sind, kritische Arbeiten wie ein filtertuchschonendes Abschaben von Filterkuchenresten durchzuführen.

Der Erfindung liegt die Aufgabe zugrunde, eine Filterpresse mit einem universeller einsetzbaren Arbeitswagen auszurüsten, mit dem auch komplizierte Arbeitsvorgänge ausgeführt werden können.

Ausgehend von einer Filterpresse der eingangs genannten Art, ist erfindungsgemäß vorgesehen, daß der Arbeitswagen mit mindestens einer auf die Filterplatten ausrichtbaren, an eine zugehörige digitale Auswertstation angeschlossenen Rasterbild-Kamera, Scannereinrichtung oder holographische Aufnahmeeinrichtung, und mit einem mehrgelenkigen Roboterarm ausgerüstet ist, dessen Greifhand auswechselbare Arbeitsgerätschaften zugeordnet sind. Dabei können der Erfindung zufolge die Arbeitsgerätschaften einen mechanischen oder pneumatischen Filterkuchenabstreifer und eine Filtertuch-Abspritzeinrichtung umfassen. Ferner kann die Greifhand des Roboterarmes entweder selbst als Mitnehmer für den Filterplatten-Transport ausgebildet oder ihr ein auswechselbarer Filterplatten-Transportmitnehmer zugeordnet sein.

Durch die Erfindung werden eine Reihe von Vorteilen erreicht.

Zum einen wird für die verschiedensten Arbeitsvorgänge nur noch ein einziger Arbeitswagen benötigt, wodurch der konstruktive Aufwand und der Platzbedarf begrenzt werden. Durch die Ausrüstung des Arbeitswagens mit einer Rasterbildkamera oder sonstigen optischen Überwachungseinrichtungen können auch diffizile Arbeitsvorgänge gezielt und exakt ausgeführt werden. Dies ist insbesondere von Bedeutung beim Abschaben der Filterkuchenreste von den Filtertüchern, da nunmehr ein enges Nachahmen der sonst von Hand ausgeführten Abschabebewegungen möglich ist. Das Abschaben kann insbesondere mittels eines ein weiches Kunststoffblatt aufweisenden Löffel erfolgen, der immer nur an die Stellen herangeführt wird, an denen tatsächlich Filterkuchenreste hängen.

Kritische Zonen liegen beispielsweise bei dem mittleren Trübedurchlaß der Filterplatten, im Bereich der Stütznocken und insbesondere im Bereich des Dichtrandes vor. Der Abschabelöffel kann z.B. nunmehr mit einer schälenden Bewegung hin und her des besonders kritischen unteren Dichtrandes der Filterplatten geführt werden, womit entscheidend dazu beigetragen werden kann, daß erst nach einer größeren Anzahl von Filtrationszyklen eine Abspritzung der gesamten Filtertücher erforderlich wird. Mit der Rasterbildkamera können auch Schäden am Filtertuch automatisch erkannt und ein entsprechendes Warnsignal ausgelöst werden.

Die Rasterbild-Auswertstation wird zweckmäßigerweise stationär in einer Schaltwarte angeordnet, in der die von der Kamera erfaßten Ist-Rasterbilder mit gespeicherten Soll-Rasterbildern verglichen und von der aus von der Soll-Istwertabweichung abhängige, vorprogrammierte Stellbefehle an den Verfahrantrieb des Arbeitswagens und an die Stellmotore des Roboterarmes geliefert werden. Mittels der Rasterbild-Kamera können ferner auch die Positionen der Filterplatten beim Öffnen und Schließen des Filterplattenpaketes erfaßt werden, so daß sich der übliche Einsatz von Endschaltern oder Näherungsschaltern weitestgehend erübrigt.

Nach einem weiteren Merkmal der Erfindung ist die Rasterbild-Kameravorteilhafterweise mindestens um eine vertikale Achse motorisch verschwenkbar, so daß sie beispielsweise zur Überwachung des Filterplattentransportes senkrecht zur Filterplattenlängsachse eingestellt werden kann, während sie zur Überwachung und Steuerung eines Filterkuchenabschabens schräg auf eine Filterplattenhauptseite ausgerichtet wird.

Bei Abspritzeinrichtungen, bei denen die einander gegenüberliegenden Seiten von zwei benachbarten Filterplatten unmittelbar nacheinander abgespritzt werden, kann in einem solchen Falle die Rasterbildkamera zunächst auf die eine und dann zur anderen Filterplatte hin ausgerichtet werden.

Der Erfindung zufolge kann ferner vorgesehen werden, daß der Arbeitswagen ein oder mehrere Scheinwerfer trägt, die vorzugsweise mit einer bestimmten auf die Sensoren der Rasterbild-Kamera abgestimmten Wellenlänge strahlen. Mit der Rasterbild-Kamera können so mit hoher Erkennungsgenauigkeit Schatten erfaßt werden, die von an den Filtertüchern haftenden Filterkuchenresten geworfen werden. Das Arbeiten mit einer bestimmten Wellenlänge macht die Steuerung der Arbeitsvorgänge unabhängig von den allgemeinen Lichtverhältnissen am Aufstellungsort der Filterpresse.

Gemäß einer bevorzugten Ausführungsform der Erfindung ist der Arbeitswagen auf dem Führungsträger verfahrbar und besteht aus einer den Antriebsmotor tragenden Brücke und zwei seitlich neben den Filterplatten abwärtsgerichteten Holmen, von denen einer den Roboterarm trägt, welcher eine zum Überstreichen einer gesamten Filterplatte ausreichende Länge besitzt. Die Rasterbild-Kamera kann dabei an einem der Holme und mindestens ein Scheinwerfer am gegenüberliegenden Holm angeordnet sein.

Der Roboterarm kann mindestens drei, jeweils um zur Filterpresse-Längsachse parallele Achsen motorisch verschwenkbare Hebel aufweisen, welche in eine seitlich neben dem Filterplattenpaket liegende Grundstellung zusammenfaltbar sind, so daß der Roboterarm beim hydraulischen Schließen der Filterpresse außerhalb der Bewegungsbahn der Filterplatten liegt.

Die Greifhand ist vorzugsweise noch zusätzlich um eine zweite, zur ersten Drehachse senkrechte Achse verschwenkbar, wodurch die Einsatzmöglichkeiten des Roboterarmes noch weiter erhöht werden.

Alternativ kann der Arbeitswagen aber auch auf seitlich der Filterpresse angeordneten Schienen verfahrbar sein.

Der Gegenstand der Erfindung wird im folgenden anhand der Zeichnung näher erläutert; in der Zeichnung zeigen:

Fig. 1    in einer vereinfachten perspektivischen Darstellung eine mit einem universell einsetzbaren Arbeitswagen ausgerüstete Filterpresse nach der Erfindung,

Fig. 2    in einer vergrößerten Darstellung die Greifhand des Roboterarmes des Arbeitswagens,

Fig. 3    eine der Greifhand zugeordnete Abblasdüse für Filterkuchenreste,

Fig. 4    einen alternativ einsetzbaren Abstreiflöffel für Filterkuchenreste,

Fig. 5    ein zugeordnetes Spritzrohr zum Abspritzen der Filtertücher,

Fig. 6    einen der Greifhand zugeordneten Mitnehmer zum Transport der Filterplatten,

Fig. 7    in einer schematischen Darstellung die Anordnung von jeweils einem schwenkbaren Scheinwerfer und einer schwenkbaren Kamera an den Holmen des Arbeitswagens, und

Fig. 8    in schematischer Darstellung die Anordnung von jeweils zwei Scheinwerfern und zwei Kameras an den Holmen des Arbeitswagens.

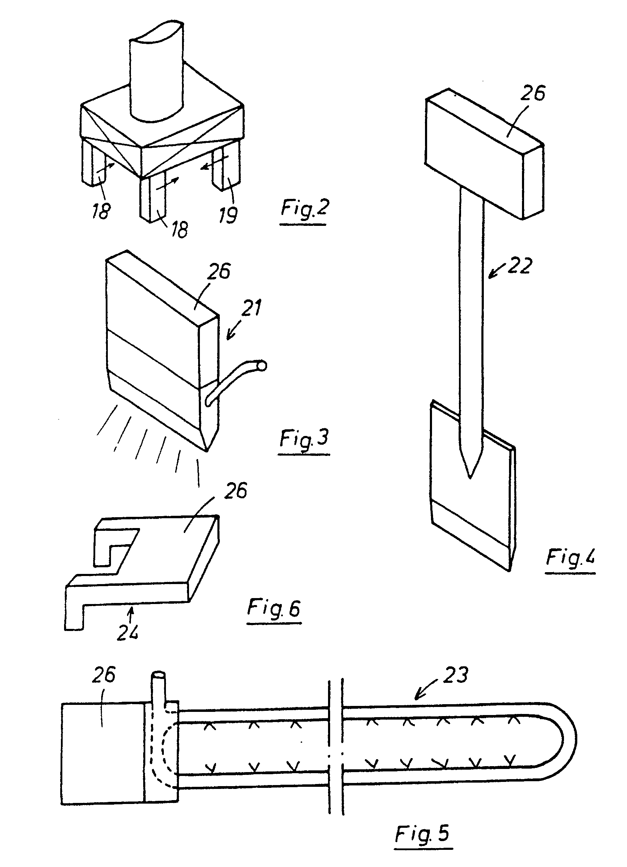

An einem Führungsträger 1, der beim Ausführungsbeispiel aus zwei parallelen Doppel-T-Trägern 2, 3 besteht, ist ein Paket von Filterplatten 4 mittig über Jochstücke 5 verfahrbar aufgehängt. Auf den oberen Flanschen der Doppel-T-Träger 2, 3 ist ein Arbeitswagen 6 verfahrbar gelagert, der aus einer einen Verfahrantrieb 7 tragenden Brücke 8 und zwei seitlichen, neben den Doopel-T-Trägern 2, 3 und den Filterplatten 4 abwärtsgerichteten Holmen 9, 10 besteht. Der Holm 9 trägt an seinem unteren Ende einen mehrgelenkigen Roboterarm 11, der aus zwei Hebeln 12, 13, die jeweils motorisch um zur Filterpressen-Längsachse parallele Achsen 14, 15 schwenkbar sind, und einer vorderen Greifhand 16 besteht. Die Greifhand 16 ist um eine zur Filterpressenachse parallele Achse 17 schwenkbar. Ihr unterer Teil mit den Greiffingern 18, 19 ist um eine weitere zur Längsstreckung des Unterarm-Hebels 13 senkrechte Achse 20 drehbar. Mit den Greiffingern 18, 19 können spezielle, für die jeweils auszuführenden Arbeitsvorgänge ausgelegten Arbeitsgerätschaften gegriffen werden. Bei den Arbeitsgerätschaften handelt es sich vornehmlich um eine Abblasdüse 21 (Fig. 3) für Filterkuchenreste, um einen Abschabelöffel 22 (Fig. 4) für Filterkuchenreste, um ein Spritzrohr 23 (Fig. 5) zum Abspritzen der filtertuchüberzogenen Filterplatten und um einen Mitnehmer 24 (Fig. 6) zum Transport der Filterplatten, der dabei an dem unteren Querstück 25 des Aufhängejochstückes 5 der Filterplatten 4 angreift. Alle Arbeitsgerätschaften besitzen jeweils ein flaches Greifstück 26, das zwischen den Greiffingern 18, 19 eingefaßt wird.

Am unteren Ende des Holmes 9 ist ferner eine Rasterbild-Kamera 27 angeordnet, die um eine vertikale Achse 28 verschwenkbar ist. Am gegenüberliegenden Holm 10 ist ein Scheinwerfer 29 angebracht, der schräg auf das Filterplattenpaket ausgerichtet ist.

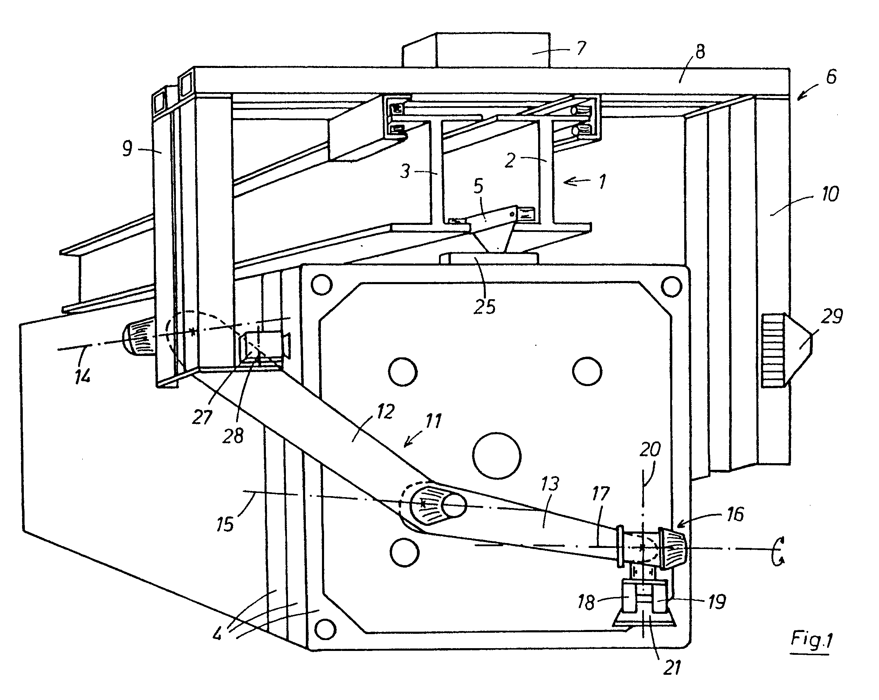

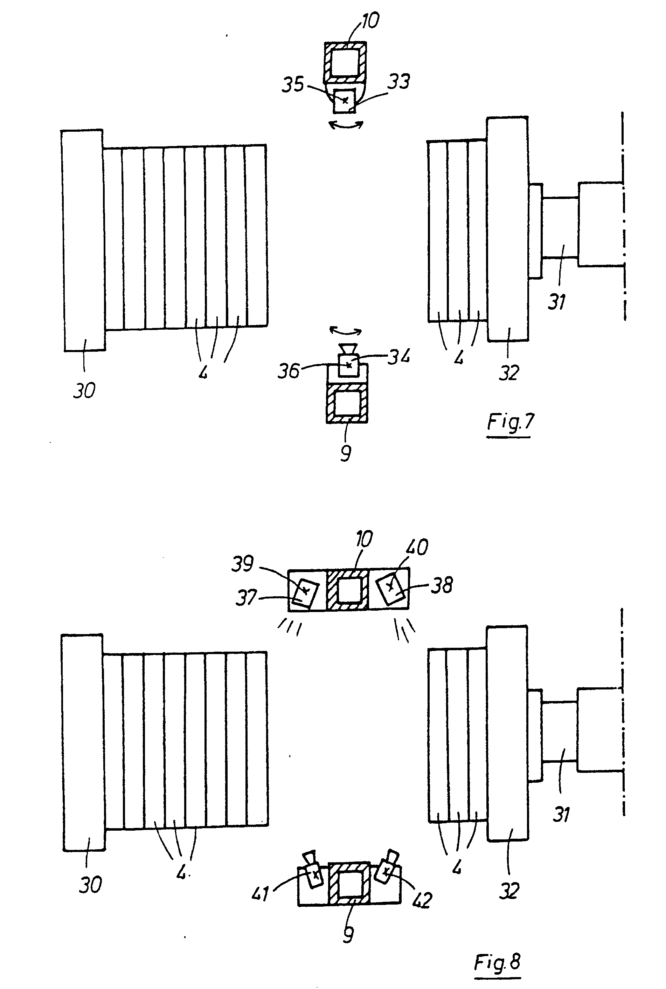

Fig. 7 zeigt eine vereinfachte, schemachtische Draufsicht auf den Filterplattenstapel einer Filterpresse, der zwischen einem stationären Endstück 30 und einem mittels einer Hydraulikeinrichtung 31 verschiebbaren Kopfstück 32 eingefaßt ist, wobei der Filterplattenstapel in geöffneter Stellung gezeigt ist. Der Arbeitswagen mit seinen Holmen 9 und 10 ist zum Öffnungsbereich des Filterplattenstapels verfahren. Der Holm 10 trägt einen Scheinwerfer 33 und der Holm 9 eine Kamera 34, die hier um vertikale Achsen 35, 36 um einen solch weiten Schwenkwinkel verstellbar sind, daß sie entweder auf die eine oder auf die andere Plattenseite augerichtet werden können. Eine solche Anordnung ist vornehmlich für einen Arbeitswagen mit nur einem Roboterarm gemäß Fig. 1 geeignet.

Beim Ausführungsbeispiel nach Fig. 8 sind am Holm 10 zwei Scheinwerfer 37, 38 angeordnet, die um vertikale Achsen 39, 40 dreheinstellbar sind und jeweils auf eine freie Plattenseite gerichtet sind. Am gegenüberliegenden Holm 9 sind entsprechend zwei Kameras 41, 42 angeordnet, die ebenfalls um vertikale Achsen dreheinstellbar sind und auf die freien Plattenseiten ausgerichtet ist. Mit einer Anordnung nach Fig. 8 können zwei Filterplattenseiten gleichzeitig beobachtet werden, so daß der Arbeitswagen mit zwei Roboterarmen ausgerüstet werden kann, die gleichzeitig ihre Arbeitsvorgänge ausführen.

**Ansprüche**

1. Filterpresse mit von einem Führungsträger (1) getragenen Filterplatten (4) und mit einem längs der Filterpresse verfahrbaren Arbeitswagen (6) zur automatischen Ausführung von Arbeitsvorgängen, dadurch gekennzeichnet, daß der Arbeitswagen (6) mit mindestens einer auf die Filterplatten (4) ausrichtbaren, an eine zugehörige digitale Auswertstation angeschlossenen Rasterbild-Kamera (27), Scannereinrichtung oder holographische Aufnahmeeinrichtung und mit einem mehrgelenkigen Roboterarm (11) ausgerüstet ist, dessen Greifhand (16) auswechselbare Arbeitsgerätschaften (21, 22, 23, 24) zugeordnet sind.

2. Filterpresse nach Anspruch 1, dadurch gekennzeichnet, daß die Arbeitsgerätschaften einen mechanischen (22) und/oder pneumatischen Filterkuchenabstreifer (21) und eine Filtertuch-Abspritzeinrichtung (23) umfassen.

3. Filterpresse nach Anspruch 2, dadurch gekennzeichnet, daß die Greifhand (16) des Roboterarmes (11) entweder selbst als Mitnehmer für den Filterplatten-Transport ausgebildet oder ihr ein auswechselbarer Filterplatten-Transportmitnehmer (24) zugeordnet ist.

4. Filterpresse nach einem der Ansprüche 1 bis 3, dadurch gekennzeichnet, daß die Rasterbild-Kamera (27;34) mindestens um eine vertikale Achse (28;36) motorisch verschwenkbar ist.

5. Filterpresse nach einem der Ansprüche 1 bis 4, dadurch gekennzeichnet, daß der Arbeitswagen (6) ein oder mehrere Scheinwerfer (29;33;37,38) trägt, die vorzugsweise mit einer bestimmten auf die Sensoren der Rasterbild-Kamera (27;34) abgestimmten Wellenlänge strahlen.

6. Filterpresse nach den Ansprüchen 1 bis 5 dadurch gekennzeichnet, daß der Arbeitswagen (6) auf dem Führungsträger (1) verfahrbar ist und aus einer den Verfahrantrieb (7) tragenden Brücke (8) und zwei seitlich neben den Filterplatten (4) abwärts gerichteten Holmen (9,10) gesteht, von denen einer den Roboterarm (11) trägt, welcher eine zum Überstreichen einer gesamten Filterplatte (4) ausreichende Länge besitzt.

7. Filterpresse nach Anspruch 6, dadurch gekennzeichnet, daß die Rasterbild-Kamera (27;34) an einem der Holme (9) und mindestens ein Scheinwerfer (29;33;37,38) am gegenüberliegenden Holm (10) angeordnet ist.

8. Filterpresse nach einem der Ansprüche 1 bis 7, dadurch gekennzeichnet, daß der Roboterarm (11) aus mindestens drei, jeweils um zur Filterpressen-Längsachse parallele Achsen (14, 15, 17) motorisch verschwenkbare Hebel (12, 13, 16) aufweist, welche in eine seitlich neben dem Filterplattenpaket liegende Grundstellung zusammenfaltbar sind.

9. Filterpresse nach Anspruch 8, dadurch gekennzeichnet, daß die Greiffinger (18, 19) der Greifhand (16) um eine zu ihrer horizontalen Schwenkachse (17) senkrechte Achse (20) motorisch verschwenkbar sind.

10. Filterpresse nach einem oder mehreren der Ansprüche 1 bis 5, 8 und 9, dadurch gekennzeichnet, daß der Arbeitswagen auf seitlich der Filterpresse angeordneten Schienen verfahrbar ist.

**Claims**

1. Filter-press with filter-plates (4) mounted on a guide-bracket (1) and with a movable operating carriage (6) which carries out operating procedures automatically, characterised in that the operating carriage (6) is equipped with at least one raster-screen camera (27), scanning device or holographic recording apparatus, connected to its own digital evaluation station, which can be directed towards the filter-plates (4), and with an articulated robot arm (11) on whose gripping hand (16) interchangeable items of processing apparatus (21,22,23,24) are positioned.

2. Filter-press according to Claim 1, characterised in that the processing apparatus includes a mechanical (22) and/or pneumatic filter-cake-removal scraper (21) and a filter-cloth spray-cleaning device (23).

3. Filter-press according to Claim 2, characterised in that the gripping-hand (16) of the robot arm (11) itself takes the form of a carrier for the filter-plate or has a corresponding removable filter-plate transporter (24).

4. Filter-press according to one of Claims 1 to 3, characterised in that the raster-screen camera (27;34) is rotatable by motor around at least one vertical axis (28;36).

5. Filter-press according to one of Claims 1 to 4, characterised in that the operating carriage (6) has one or more spotlights (29;33;37;38), which preferably shine on a determined wavelength adjusted to the sensors of the raster-screen camera (27;34).

6. Filter-press according to one of Claims 1 to 5, characterised in that the operating carriage (6) is moveable along the guide-bracket (1) and consists of a bridge (8) carrying the drive (7) which moves it and of two downward-pointing bars (9,10) at the side of the filter plates (4), one of which carries the robot arm (11) which is of suffient length to reach across an entire filter-plate (4).

7. Filter-press according to Claim 6, characterised in that the raster-screen camera (27;34) is located on one of the bars (9) and at least one of the spotlights (29;33;37;38) is located on the opposite bar (10).

8. Filter-press according to one of Claims 1 to 7, characterised in that the robot arm (11) has at least three levers (12,13,16), each rotatable by motor around axes (14,15,17) parallel to the longitudinal axis of the filter-press, which may be folded together in a basic position to the side of the filter-plate assembly.

9. Filter-press according to Claim 8, characterised in that the gripping fingers (18,19) of the gripping hand (16) may be rotated by motor around an axis (20) perpendicular to their horizontal axis of rotation (17).

10. Filter-press according to one or more of Claims 1 to 5, 8 and 9, characterised in that the operating carriage (6) is moveable along rails located at the side of the filter-press.

**Revendications**

1. Filtre-presse comportant des plateaux de filtre (4) portés par un support de guidage (1) et un chariot de travail (6) déplaçable le long du filtre-presse, en vue du déroulement automatique des processus de travail, caractérisé en ce que le chariot de travail (6) est équipé d'au moins une caméra à image tramée (27), d'un dispositif d'exploration ou d'un dispositif de prise de vues holographiques, orientable vers les plateaux de filtre (4), raccordé(e) à un poste d'exploitation numérique correspondant, et équipé d'un bras robotisé (11) à plusieurs articulations, des appareillages de travail (21,22,23,24) interchangeables étant associés à sa main de préhension (16).

2. Filtre-presse selon la revendication 1, caractérisé en ce que les appareillages de travail comprennent un racleur de gâteau de filtre mécanique (22) et/ou pneumatique (21) et un dispositif d'aspersion de la toile de filtre (23).

3. Filtre-presse selon la revendication 2, caractérisé en ce que la main de préhension (16) du bras de robot (11) est réalisée soit elle-même comme organe d'entraînement pour le transport des plateaux de filtre soit en se voyant associé un organe d'entraînement, interchangeable, des plateaux de filtre (24).

4. Filtre-presse selon l'une des revendications 1 à 3, caractérisé en ce que la caméra à image tramée (27;34) est orientable par pivotement motorisé au moins autour d'un axe vertical (28;36).

5. Filtre-presse selon l'une des revendications 1 à 4, caractérisé en ce que le chariot de travail (6) porte un ou plusieurs projecteurs (29;33;37;38) qui rayonnent de préférence sous une longueur d'onde déterminée qui est déterminée par les capteurs de la caméra à image tramée (27;34).

6. Filtre-presse selon l'une des revendications 1 à 5, caractérisé en ce que le chariot de travail (6) est déplaçable sur le support de guidage (1) et se compose d'un pont (8) portant le mécanisme de déplacement (7) et de deux montants (9,10) orientés latéralement vers le bas, à côté des plateaux de filtre (4), dont l'un porte le bras de robot (11) qui est d'une longueur suffisante pour balayer la totalité d'un plateau de filtre (4).,

7. Filtre-presse selon la revendication 6, caractérisé en ce que la caméra à image tramée (27;34) est disposée sur l'un des montants (9) et qu'au moins un projecteur (39;33;37;38) est disposé sur le montant opposé (10).

8. Filtre-presse selon l'une des revendications 1 à 7, caractérisé en ce que le bras de robot (11) se compose d'au moins trois leviers motorisés (12,13,16), pivotants chacun autour d'axes (14,15,16) parallèles à l'axe longitudinal du filtre-presse, qui sont repliables en une position de base située latéralement à côté du paquet de plateaux de filtre.

9. Filtre-presse selon la revendication 8, caractérisé en ce que les doigts de préhension (18,19) de la main de préhension (16) sont motorisés pivotants autour d'un axe (20) perpendiculaire à leur axe de pivotement horizontal (17).

10. Filtre-presse selon l'une des revendications 1 à 5, 8 et 9, caractérisé en ce que le chariot de travail est déplaçable sur des rails disposés à côté du filtre-presse.

Fig.1

_Fig.2_

18      18      19

_Fig.4_

26

22

26

_Fig.3_

21

26

_Fig.6_

24

26

23

_Fig.5_

_Fig.7_

_Fig.8_